# EUROPEAN PATENT APPLICATION

(11) **EP 4 332 642 A1**
(43) Date of publication of application: **06.03.2024**
(21) Application number: 22192686.8
(22) Date of filing: 29.08.2022
(51) Int. Cl.: G02B 3/00, G02B 13/00, B29D 11/00

(54) **STRUCTURED SUBSTRATE, METHOD FOR MANUFACTURING THE STRUCTURED SUBSTRATE, AND USE OF THE STRUCTURED SUBSTRATE**

(71) Applicant: SCHOTT AG, 55122 Mainz (DE)
(72) Inventor: SOHR, Dr. Oliver, 55116 Mainz (DE); LEUGNER, Sebastian, 64579 Gernsheim (DE); THOMAS, Dr. Jens Ulrich, 55128 Mainz (DE); MÄÄTTÄNEN, Antti, 33710 Tampere (FI)
(74) Representative: Blumbach · Zinngrebe Patentanwälte PartG mbB

(57) **Abstract**

The invention relates to a structured substrate (1), preferably for applications in micro systems technology, such as for micro optical systems, comprising: a planar substrate (10), preferably comprising glass material, and having two opposing planar surfaces (12, 14), at least one through-hole (20) extending through the material of the planar substrate forming an inner wall surface surrounding the through-hole and connecting the two opposing planar surfaces, and a light absorbing coating (30) covering at least some areas of the inner wall surface of the through-hole. The invention further relates to method of manufacturing said structured substrate and to use of said structured substrate.

## Description

The invention relates to a structured substrate, preferably for applications in micro systems technology, such as for micro optical systems.

In microsystem technology, multiple wafers or substrates are often stacked on top of each other to form layered systems, for example to manufacture micro-optics. On a wafer level typically several hundred optical devices are fabricated on each wafer. For more complex optical systems, e.g. imaging optics for smartphones, several of such functional wafers are combined in a layered system. In a dicing step, the single devices are hence obtained. Often, such layered systems also include spacer wafers or spacer substrates to provide desired distances between the functional layers which comprise optical elements. Such spacer wafers are flat glass-wafer of a defined thickness, that provide a multitude of through-holes, which have at least the diameter of the individual optical elements of the functional wafers. However, depending on the surface of the through holes, undesired reflections, contrast reduction, ghosting or other disturbances may occur in the final devices.

When manufacturing such microsystems, the alignment of multiple wafers or substrates with respect to each other is critical to ensure the functionality of the micro-optical devices. For such alignment of wafers or substrates, printed or ablated surface markings are often used. However, such near-surface markings may have the disadvantage that parallax errors can occur. Another option is to use through-holes in the wafers or substrates as alignment marks or fiducials. However, pattern recognition of such through-holes is challenging due to lower contrast of the through-hole markers. Misalignment of lenses with respect to each other is detrimental to imaging properties. The more compact the micro-optical system is, e.g. with high refractive index lenses, the tighter the tolerances.

An object of the invention is thus to reduce stray light, reflections, ghosting or other disturbances at spacer substrates in layered micro-optics, to increase contrast, and to optimize the assembly of microsystems in particular by improving pattern recognition of through-holes.

To solve this objective, a structured substrate is disclosed, preferably for applications in micro systems technology, such as for micro optical systems.

The structured substrate comprises a planar substrate having two opposing planar surfaces. The planar substrate may comprise brittle material, for example glass, ceramics, glass ceramics or the like, as is detailed further below.

The structured substrate further comprises at least one through-hole extending through the material of the planar substrate forming an inner wall surface surrounding the through-hole and connecting the two opposing planar surfaces.

Further, the structured substrate comprises a light absorbing coating covering at least some areas of the inner wall surface of the through-hole.

For alignment uses, vertical or almost vertical walls are preferred. Thus, in some embodiments of the invention, the angle of the inner wall surface to the planar surface may be 90° +/- 1°, preferably +/- 0.5°, more preferably +/-0.25°.

However, for other uses, such as for example beam traps, conical designs may also be employed. Thus, in some embodiments of the invention, the at least one through-hole is conical so that its diameter decreases from one planar surface to the other planar surface of the substrate.

Generally, the planar substrate may have a thickness, i.e. a dimension extending from one planar surface to the other planar surface, which is between 20 µm and 8 mm, preferably between 50 µm and 4 mm, more preferably between 100 µm and 3 mm and most preferably between 250 µm and 1 mm.

The through-hole extending through the material of the planar substrate may define a diameter, which preferably is the smallest dimension of the through-hole parallel to the plane of the planar substrate.

In some embodiments of the invention, the through-hole may have a diameter which is between 0.3 µm and 10 mm. Such diameters, diameters in the range of 5 µm to 10 mm or larger diameters in the mm range may for example be preferred for optical cavities, e.g. for reducing stray light in micro-optics.

In some embodiments of the invention, the through-hole may have a diameter which is between 0.3 µm and 300 µm. Such diameters may be preferred for alignment purposes, and may preferably be selected so that the structure used for alignment completely fills the field of view of the microscope optics (e.g. up to approx. 300 µm).

An aspect-ratio may be defined as the ratio between the diameter of the through-hole and the thickness of the planar substrate.

Such aspect-ratio may, for example, be between 0,000075 and 17.5, preferably between 0,0001 and 10, more preferably between 0,00015 and 5, more preferably between 0,0003 and 2, more preferably between 0,001 and 1.

One may consider the inner wall surface of the through-hole before being coated. It may be preferred if such roughness is in the range of the wavelength of the light used, for example in the UV range, VIS range, NIR range.

In some embodiments of the invention, the inner wall surface has an arithmetic average roughness between 0.1 µm and 2 µm, preferably between 0.2 µm and 1 µm, more preferably between 0.4 µm and 1 µm.

One may also consider the roughness of the through-hole after being coated, i.e. the roughness of the coating itself. It is noted that the roughness before and after being coated may depend on the coating technique and parameters. For example with atomic layer deposition (ALD), the roughness of the surface may be retained, in particular if very thin ALD layers are deposited. In case of thicker layers, for example with thicknesses of greater than 250nm, or with other coating techniques, the original roughness of the inner wall may be reduced.

In some embodiments of the invention, the light absorbing coating may have an arithmetic average roughness between 0.05 µm and 2 µm, preferably between 0.1 µm and 1 µm, more preferably between 0.2 µm and 0.5 µm.

The light absorbing coating may have a thickness between 5 nm and 5 µm, preferably between 15 nm and 1000 nm, more preferably between 50 nm and 500 nm.

Generally, the inner wall of the through-hole may be fully or partially coated.

In some embodiments of the invention, the light absorbing coating covers at least 10%, preferably at least 50%, more preferably at least 90%, most preferably the entire area, of the inner wall surface.

In some embodiments of the invention, the inner wall surface is partially free of the light absorbing coating, in particular at least 10% along the direction of the thickness of the substrate.

One or both of the planar surfaces of the substrate may be free of the light absorbing coating.

One or both of the planar surfaces may be polished. In some embodiments, one or both of the planar surfaces may have an RMS roughness of less than 10 nm, preferably of less than 5 nm, more preferably of less than 1 nm, more preferably of less than 0.5 nm, more preferably of less than 0.1 nm. Such surface roughness may advantageously be achieved without additional effort by polishing the surface or surfaces. Such low roughness may be particularly beneficial when stacking substrates on top of each other to form layered systems. Thus, the step of joining layers in the production may be optimized. Smaller RMS roughness may lead to better contact bonding, sprueing and/or optical manufacturing tolerances.

Preferably, the total thickness variation (TTV) of the substrate is lower than 5pm.

A parameter of interest may be the absorption coefficient or extinction coefficient of the light absorbing coating.

In some embodiments of the invention, the light absorbing coating may have an absorption coefficient α and/or an extinction coefficient *κ* for at least one wavelength λ0 within the range of 250 nm to 1600 nm, preferably within the range of 400 nm to 750 nm, more preferably for all wavelengths within one of said ranges, of at least 0.01, preferably at least 0.05, more preferably at least 0.1.

The complex refractive index may be written as *n* = *n - iκ,* the extinction coefficient being the imaginary part, having a value ***κ*.** The absorption coefficient may be written as α = 4πκ/λ0 with λ0 being the vacuum wavelength. Accordingly, the penetration depth, i.e. the distance after which the intensity is reduced by a factor of 1/e, is δp = 1/α = λ0/4πκ.

In some embodiments of the invention, the light absorbing coating may have an absorption and/or extinction coefficient for at least one wavelength within the range of 250 nm to 1600 nm, preferably within the range of 400 nm to 750 nm, more preferably for all wavelengths within one of said ranges, such that over the thickness of the planar substrate a damping of 20dB is achieved.

An absorption or extinction coefficient as defined above may in the VIS spectrum may for example be preferred for alignment purposes.

In some embodiments of the invention, it may be envisaged that the light absorbing coating has a reflectance of more than 60 %. An absorbent and/or reflective coating may for example be in the UV-NIR spectrum.

The light absorbing coating may generally comprise or consist of a metal, metal nitride, metal carbide, or metal oxide. Metallic materials may in some cases be preferred, followed by metal nitrides and carbides. It is noted that the material may be selected to be compatible with the processes as outlined below.

In some embodiments of the invention, the light absorbing coating may comprise at least one of the following materials: Al2O3, B2O3, Co2O3, Cr2O3, CuO, Fe2O3, Ga2O3, HfO2, In2O3, MgO, Nb2O5, NiO, Pd, Pt, Al, Ag, Mo, W, SiO2, SnO2, Ta2O5, TiO2, TaNx, (Ta,Al)N, TiCrOx, (Ti,Al)N, (Ti,Al)C, TiC, AlC, AlN, TiN, VO2, WO3, ZnO, (Al, Zn)O, ZnS, ZnSe, ZrO2, Rare earth (RE) oxides, Sc2O3, Y2O3, Carbon, Carbonblack, Ca10(PO4)6(OH)2), Polyimides, PMDA-ODA, PMDA-DAH, 3-aminopropyltrimethoxysilane coupling agent.

As already described, the coating may be applied by means of one or more of several processes. For example, the light absorbing coating may be deposited by means of vacuum deposition, preferably physical vapor deposition (PVD) or chemical vapor deposition (CVD), preferably atomic layer deposition (ALD) or plasma-enhanced chemical vapor deposition (PECVD).

As mentioned above, the planar substrate may comprise or consist of glass, fused silica, ceramics, glass-ceramics and/or crystals, e.g. sapphire. For example Zerodur^{®} may be employed. In certain embodiments, polymer or plastic materials might also be used.

In preferred embodiments, the the planar substrate comprises glass material, ceramic material, glass ceramic material and/or crystalline material, e.g. sapphire.

The planar substrate may comprise at least one of the following components: SiO2 content of at least 30 wt%, preferably at least 50 wt%, more preferably at least 80 wt%.

In a further embodiment of the invention, the structured substrate may comprise a plurality of through-holes extending through the material of the planar substrate, each forming an inner wall surface surrounding the respective through-hole and connecting the two opposing planar surfaces of the planar substrate.

The at least one through-hole or at least one of the plurality of through-holes may have a cross section which is non-mirror-symmetrical and/or non-circular, preferably comprises one or more rectangular portions, for example is L-shaped.

Such shapes may be preferred for substrate alignment. Generally, The at least one or plurality of through-holes may be designed such that (i) displacements are detectable, (ii) rotations are detectable, and/or (iii) a wrong orientation (top side on top side vs. bottom side on top side) is detectable. In particular, number, size and/or shape of the at least one or plurality of through-holes may be designed such as to ensure these conditions. One example is an L-shaped through-hole. However many other designs that will also be suitable.

The invention also relates to a method for manufacturing a structured substrate, preferably as outlined above.

The method comprises providing a planar substrate, preferably comprising glass material, and having two opposing planar surfaces, wherein at least one through-hole is inserted or extends through the material of the planar substrate so as to form an inner wall surface surrounding the through-hole and connecting the two opposing planar surfaces.

The method also comprises depositing a light absorbing coating onto the planar substrate covering at least some areas of the inner wall surface of the through-hole.

The method may also comprise treating, preferably polishing, one or both of the planar surfaces of the planar substrate to remove coating covering the planar surfaces, so that the planar surfaces are free of the light absorbing coating. Polishing may be applied, so that a RMS roughness of less than 10 nm, preferably less than 5 nm, more preferably less than 1 nm is achieved. For polishing it is referred to chapter 8 "novel polishing methods", pages 319-352 in Materials Science and Technology of Optical Fabrication, John Wiley & Sons, 16.10.2018.

The method may comprise inserting the at least one through-hole in the material of the planar substrate. In particular at least one thin filament or filamentary damage may be introduced into the material of the substrate by means of a laser process. Such filament may have a diameter of approx. 0.1 - 0.5 µm, e.g. 0.3 µm. Preferably, in a further step, such filament may then be expanded by etching. Moreover, multiple filaments may be introduced. By placing multiple filaments close together, practically any shape and size of through-hole can be created. It is noted that if only small through-holes are desired, etching can also be omitted.

With respect to the method of coating, the light absorbing coating may in some embodiments of the invention be deposited onto the planar substrate by means of vacuum deposition, preferably physical vapor deposition (PVD) or chemical vapor deposition (CVD), preferably atomic layer deposition (ALD) or plasma-enhanced chemical vapor deposition (PECVD).

The invention further relates to the use of a structured substrate, preferably as outlined above, for aligning the structured substrate with respect to another element, wherein, preferably, the structured substrate is observed in top view on one of its planar surfaces so that the light absorbing coating, which covers the inner wall surface, is visible in side view forming a contour surrounding the through-hole, and wherein, preferably, a position of said contour surrounding the through-hole is compared to a defined position on the another element.

Such defined position may for example be a marking on the another wafers, which comprise functional elements such as micro-optics, light sensors or emitters.

It is noted that the observing in top view on one of its planar surfaces need not be performed directly on the surface, but can also be performed through other substrates or layers, in particular in micro-systems comprising multiple layers.

In one particular embodiment the another element may be a second structured substrate, preferably as outlined above, and the structured substrate and the second structured substrate are positioned on top of each other such that one of the planar surfaces of the structured substrate faces one of the planar surfaces of the second structured substrate, and both the structured substrate and the second structured substrate are observed in top view so that simultaneously a contour surrounding the through-hole of the structured substrate and a second contour surrounding the through-hole of the second structured substrate is formed, and a position of said contour is compared to a position of said second contour.

In the use of the structured substrate, the positional error between said contour surrounding the through-hole and said defined position on the another element, preferably in the x-y-plane, may be reduced to less than 2 µm, preferably to less than 0.1 µm, even more preferably to less than 50 nm.

Also, the positional error between said contour surrounding the through-hole and said defined position on the another element, preferably in the z-direction, more preferably over the entire area of the substrate, may be reduced to less than 20 µm.

It is also conceivable that the structured substrate and/or the another element comprises markings which are introduced by ion beam treatment, wherein said markings preferably are used for aligning and/or assisting aligning the structured substrate with respect to another element.

The invention further relates to the use of a structured substrate as outlined above for manufacturing a micro system, preferably a micro optical system.

Preferably, the micro optical system comprises multiple layers and at least one of said layers is formed as the structured substrate.

For example, three layers may be stacked, wherein the middle one may be a structured substrate as outlined above. Such middle layer may in particular be a spacer layer. The other or outer layers may be provided with refractive or diffractive micro-optics. In this example two outer micro-optics layers and the inner spacer layer are preferably aligned with each other as outlined above.

Preferably, stray light in the micro system is reduced by means of the light absorbing coating covering the inner wall surface of the through-hole extending through the material of the planar substrate of the structured substrate.

The invention further relates to an assembly comprising a layer structure of two or more layers, wherein at least one of the layers is a structured substrate as outlined above.

The assembly may comprise at least one further substrate layer having markings corresponding to the through holes of the structured substrate, wherein the markings of the further substrate and the through holes of the structured layer are aligned, preferably as outlined above.

The assembly may comprise at least three layers, having in this order a first micro-optic layer, a structured substrate as outlined above, and a second micro-optic layer.

Such three layers may be considered to form a unit cell and more than three layers, for example five layers, may also be stacked with two such unit cells, wherein the middle layer belongs to both unit cells.

The invention further relates to a beam trap comprising a structured substrate as described above and a further substrate connected thereto, said further substrate comprising at least one blackened and/or roughened surface.

Generally, the invention is at least suitable for wafer bonding, stacked transparent components, micro-optics, wafer level alignment, stray light suppression, glass circuit boards, micro sensors, such as wafer level or pressure sensors, microfluidics, LIDAR sensors, sensor arrays, wafer level packaging.

The invention is described in more detail below with reference to the figures.
- Fig. 1: shows side views of processing steps (a)-(d) for manufacturing a structured substrate,
- Fig. 2: shows a side view of two stacked structured substrate (a), a further side view in which the two stacked structured substrates are illuminated (b), and a top view of the two stacked structured substrates (c),
- Fig. 3: shows a top view of a substrate having an L-shaped through-hole,
- Fig. 4: shows schematically the alignment of two L-shaped through-holes with respect to each other,
- Fig. 5: shows side views of processing steps (a)-(d) for manufacturing a layered assembly comprising a structured substrate and optical substrates.

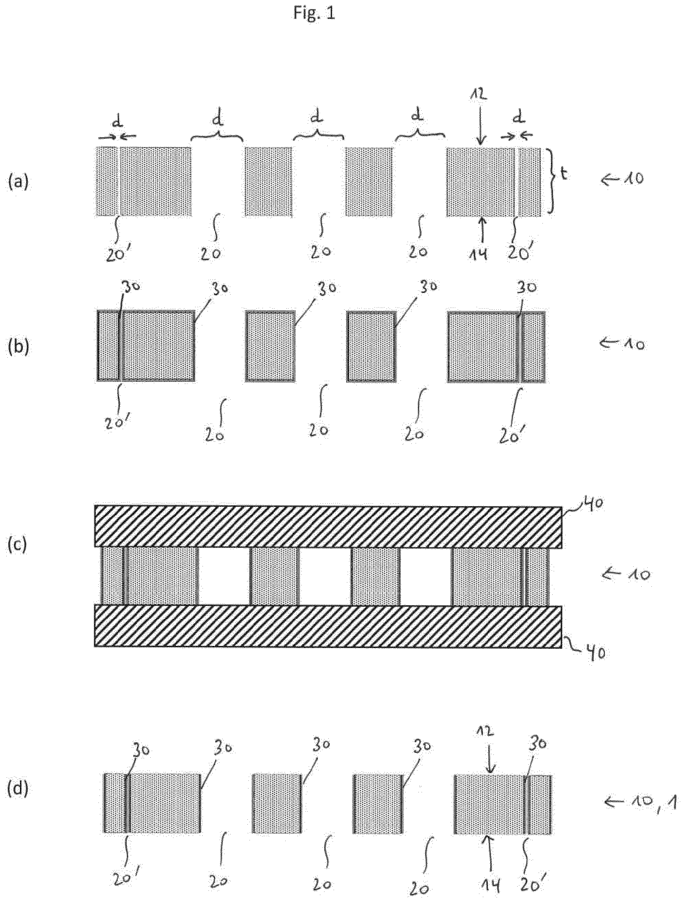

Fig. 1 shows an example of a process for manufacturing a structured substrate 1, wherein the process comprises the steps (a)-(d).

In step (a), a planar substrate 10 is provided, wherein the planar substrate comprises two opposing planar surfaces 12, 14 and multiple through-holes 20, 20' extending through the thickness t of the planar substrate.

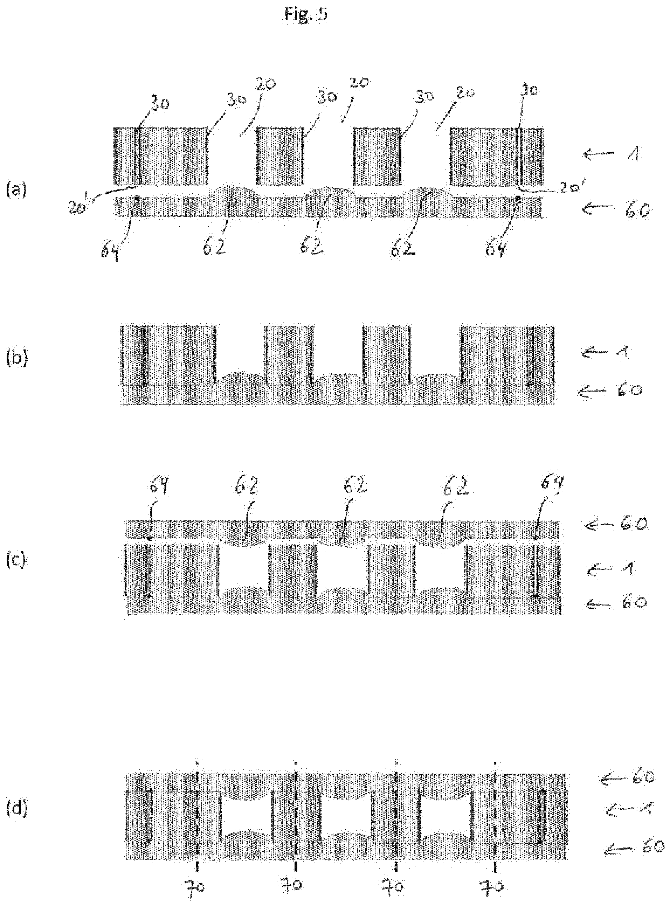

Some of the through-holes 20 have a larger diameter d than other through-holes 20'. The through-holes 20 having the larger diameter d may be designed to accommodate optical elements 62 (see Fig. 5), while the through-holes 20' having the smaller diameter d may be used for aligning multiple substrates which are stacked on top of each other.

In step (b), a light absorbing coating 30 is deposited onto the planar substrate so as to cover at least some areas of the inner wall surfaces of the through-hole 20, 20'. Such coating may for example have a thickness between 5 nm and 5 µm and may be configured as absorbing and/or reflecting in particular wavelength ranges, such as for example the UV-NIR range. The coating may be applied for example by atomic layer deposition (ALD), however other coating techniques are also possible, such as ion beam coating or liquid coating. In this particular example, the light absorbing coating 30 not only covers the inner wall surfaces of the through-hole 20, 20', but also covers the two opposing planar surfaces 12, 14 of the substrate 10.

Thus, in step (c), the planar surfaces 12, 14 of the substrate 10 are polished to remove the coating covering the planar surfaces 12, 14, so that the planar surfaces 12, 14 are free of the light absorbing coating. The polishing can be carried out with a polishing medium 40. It is also conceivable that the planar surfaces 12, 14 are subjected to plasma etching or laser ablation to remove the coating covering the planar surfaces 12, 14. The polishing can also consist of multiple polishing steps, especially, if it used to improve the surface quality of the planar surfaces. With decreasing grain size it is possible to obtain RMS roughnesses below 1 nm or even below 0.1 nm. Additionally the polishing can be used to compensate for total thickness variations (TTV) of the wafer.

The resulting structured substrate 1 shown in (d) comprises a planar substrate 10 having multiple through-hole 20, 20' extending through the material of the planar substrate 10 forming an inner wall surface surrounding the through-holes 20, 20' and connecting the two opposing planar surfaces 12, 14, wherein a light absorbing coating 30 covers the inner wall surfaces of the through-holes 20, 20'.

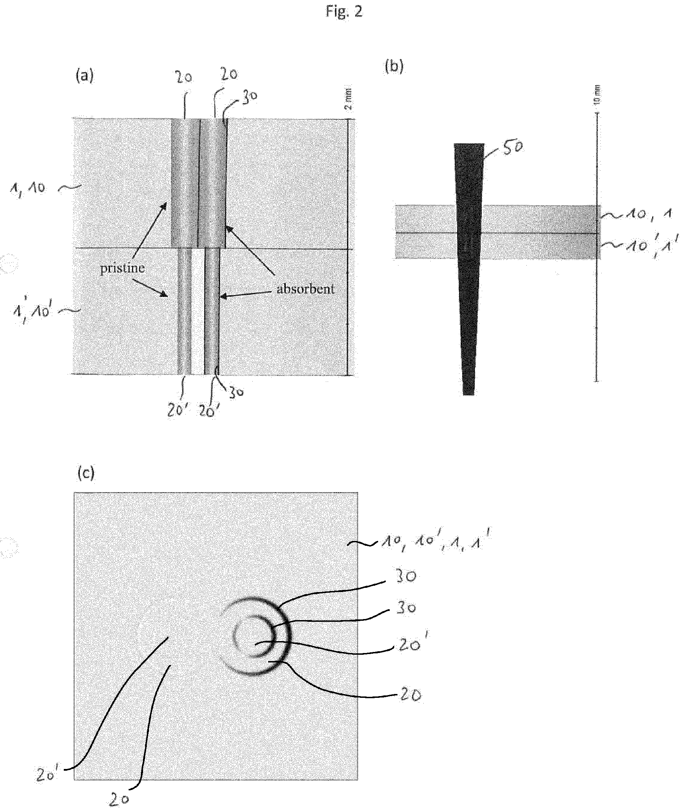

Fig. 2 (a) shows two stacked structured substrates 1, 1', wherein the upper substrate 1 comprises two adjacent through-holes 20 with a larger diameter and the lower substarte 1' comprises two adjacent through-holes 20' with a smaller diameter. The inner wall surfaces of the right through-holes in each of the two substrates are covered with a light absorbing coating 30.

Fig. 2 (b) shows an illumination setup for directing light on the structured substrates 1, 1' and through the through-holes within the substrates.

Fig. 2 (c) shows the structured substrates 1, 1' observed in top view one of its planar surfaces so that the light absorbing coating 30, which covers the inner wall surface of the right through-holes becomes visible in side view forming a contour surrounding the through-holes. As can be seen, the light absorbing coating 30 significantly improves the detectability of the through-holes acting as fiducials, thus optimizing in particular the assembly of microsystems.

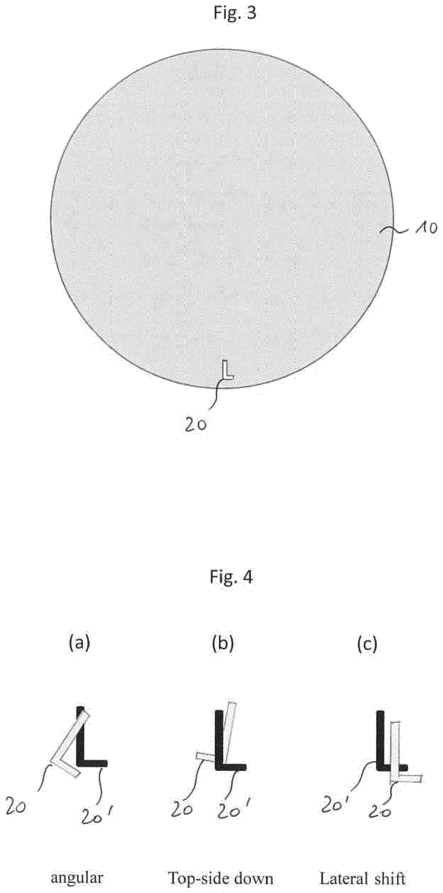

Fig. 3 shows a substrate 10 having an L-shaped through-hole 20 forming a non-mirror-symmetrical alignment marker to detect different configurations of substrates with respect to each other. As shown in Fig. 4, rotations between two through-holes 20, 20' (and corresponding substrates) are detectable (a), wrong orientations (top side on top side vs. bottom side on top side) are detectable (b), and displacements are detectable (c).

Fig. 5 shows an example of a process manufacturing a layered assembly comprising a structured substrate 1 and two optical substrates 60, wherein the process comprises the steps (a)-(d).

In steps (a) and (b) the lower optical substrate 60 is being aligned with the structured substrate 1, which corresponds to the structured substrate 1 of Fig. 1(d). To this end, the optical substrate 60 comprises alignment markers 64, which are for example printed or laser ablated in the surface of the material. These alignment markers 64 are brought into alignment with smaller outer through-holes 20' of the structured substrate 1. Thereby, the optical elements 62 of the optical substrate 60 are aligned with the larger inner through-holes 20 of the structured substrate 1 so that they can be embedded therein when the optical substrate 60 and the structured substrate 1 are connected.

In steps (c) and (d) another optical substrate 60 is aligned and connected with the structured substrate 1 in a similar manner from above resulting in a micro-optical assembly comprising three substrate layers. In a further singulation step, the micro-optical assembly can be severed along the dividing lines 70.

## Claims

1. Structured substrate (1), preferably for applications in micro systems technology, such as for micro optical systems, comprising:
a planar substrate (10), preferably comprising glass material, and having two opposing planar surfaces (12, 14),
at least one through-hole (20) extending through the material of the planar substrate forming an inner wall surface (22) surrounding the through-hole and connecting the two opposing planar surfaces (12, 14), and
a light absorbing coating (30) covering at least some areas of the inner wall surface (22) of the through-hole.

2. Structured substrate according to the preceding claim,
wherein the angle of the inner wall surface to the planar surface is 90° +/- 1°, preferably +/- 0.5°, more preferably +/- 0.25° and/or
wherein the at least one through-hole is conical so that its diameter decreases from one planar surface to the other planar surface of the substrate.

3. Structured substrate according to any one of the preceding claims,
wherein the planar substrate has a thickness (t) extending from one planar surface to the other planar surface which is between 20 µm and 8 mm, preferably between 50 µm and 4 mm, more preferably between 100 µm and 3 mm and most preferably between 250 µm and 1 mm.

4. Structured substrate according to any one of the preceding claims,
wherein the through-hole has a diameter (d) which is between 0.3 µm and 10 mm, and/or
wherein the through-hole has a diameter which is between 0.3 µm and 300 µm,
wherein the diameter of the through-hole preferably is the smallest dimension of the through-hole parallel to the plane of the planar substrate.

5. Structured substrate according to any one of the preceding claims,
wherein the through-hole defines an aspect-ratio being the ratio between a diameter (d) of the through-hole and the thickness (t) of the planar substrate, which is between 0,000075 and 17.5, preferably between 0,0001 and 10, more preferably between 0,00015 and 5, more preferably between 0,0003 and 2, more preferably between 0,001 and 1,
wherein the diameter of the through-hole preferably is the smallest dimension of the through-hole parallel to the plane of the planar substrate.

6. Structured substrate according to any one of the preceding claims,
wherein the inner wall surface has an arithmetic average roughness between 0.1 µm and 2 µm, preferably between 0.2 µm and 1 µm, more preferably between 0.4 µm and 1 µm and/ or
wherein the light absorbing coating has an arithmetic average roughness between 0.05 µm and 2 µm, preferably between 0.1 µm and 1 µm, more preferably between 0.2 µm and 0.5 µm.

7. Structured substrate according to any one of the preceding claims,
wherein the light absorbing coating has a thickness between 5 nm and 5000 nm, preferably between 15 nm and 1000 nm, more preferably between 50 nm and 500 nm.

8. Structured substrate according to any one of the preceding claims,
wherein the light absorbing coating covers at least 10%, preferably at least 50%, more preferably at least 90%, most preferably the entire area, of the inner wall surface, and/or
wherein the inner wall surface is partially free of the light absorbing coating, in particular at least 10% along the direction of the thickness of the substrate, and/or
wherein one or both of the planar surfaces are free of the light absorbing coating.

9. Structured substrate according to any one of the preceding claims,
wherein one or both of the planar surfaces (12, 14) is polished, and/or
wherein one or both of the planar surfaces (12, 14) has an RMS roughness of less than 10 nm, preferably of less than 5 nm, more preferably of less than 1 nm, more preferably of less than 0.5 nm, more preferably of less than 0.1 nm, and/or
wherein the total thickness variation (TTV) of the substrate is lower than 5 µm.

10. Structured substrate according to any one of the preceding claims,
wherein the light absorbing coating has an extinction coefficient for at least one wavelength within the range of 250 nm to 1600 nm, preferably within the range of 400 nm to 750 nm, more preferably for all wavelengths within one of said ranges, of at least 0.01, preferably at least 0.05, more preferably at least 0.1, and/or
wherein the light absorbing coating has an extinction coefficient for at least one wavelength within the range of 250 nm to 1600 nm, preferably within the range of 400 nm to 750 nm, more preferably for all wavelengths within one of said ranges, such that over the thickness of the planar substrate a damping of 20dB is achieved, and/or
wherein the light absorbing coating has a reflectance of more than 60 %.

11. Structured substrate according to any one of the preceding claims,
wherein the light absorbing coating comprises at least one of the following materials: Al2O3, B2O3, Co2O3, Cr2O3, CuO, Fe2O3, Ga2O3, HfO2, In2O3, MgO, Nb2O5, NiO, Pd, Pt, Al, Ag, Mo, W, SiO2, SnO2, Ta2O5, TiO2, TaNx, (Ta,Al)N, TiCrOx, (Ti,Al)N, (Ti,Al)C TiC, AlC, AlN, TiN, VO2, WO3, ZnO, (Al, Zn)O, ZnS, ZnSe, ZrO2, Rare earth (RE) oxides, Sc2O3, Y2O3, Carbon, Carbonblack, Ca10(PO4)6(OH)2), Polyimides, PMDA-ODA, PMDA-DAH, 3-aminopropyltrimethoxysilane coupling agent.

12. Structured substrate according to any one of the preceding claims,
wherein the planar substrate comprises glass material, ceramic material, glass ceramic material and/or crystalline material, e.g. sapphire, and/or
wherein the planar substrate comprises at least one of the following components:
SiO2 content of at least 30 wt%, preferably at least 50 wt%, more preferably at least 80 wt%.

13. Structured substrate according to any one of the preceding claims,
wherein the structured substrate comprises a plurality of through-holes extending through the material of the planar substrate, each forming an inner wall surface surrounding the respective through-hole and connecting the two opposing planar surfaces of the planar substrate, and/or
wherein the through-hole or at least one of the plurality of through-holes has a cross section which is non-mirror-symmetrical and/or non-circular, preferably comprises one or more rectangular portions, for example is L-shaped.

14. Method for manufacturing a structured substrate, preferably according to any one of the preceding claims, comprising:
providing a planar substrate, preferably comprising glass material, and having two opposing planar surfaces,
wherein at least one through-hole extends through the material of the planar substrate so as to form an inner wall surface surrounding the through-hole and connecting the two opposing planar surfaces, and,
depositing a light absorbing coating onto the planar substrate covering at least some areas of the inner wall surface of the through-hole, and
treating, preferably polishing, one or both of the planar surfaces of the planar substrate to remove coating covering the planar surfaces, so that the planar surfaces are free of the light absorbing coating.

15. Method for manufacturing a structured substrate according to the preceding claim,
wherein the light absorbing coating is deposited onto the planar substrate by means of vacuum deposition, preferably physical vapor deposition (PVD) or chemical vapor deposition (CVD), preferably atomic layer deposition (ALD) or plasma-enhanced chemical vapor deposition (PECVD).

16. Use of a structured substrate, preferably according to any one of the preceding claims, for aligning the structured substrate with respect to another element,
wherein, preferably, the structured substrate is observed in top view on one of its planar surfaces so that the light absorbing coating, which covers the inner wall surface, is visible in side view forming a contour surrounding the through-hole, and
wherein, preferably, a position of said contour surrounding the through-hole is compared to a defined position on the another element.

17. Use of a structured substrate according to the preceding claim,
wherein the positional error between said contour surrounding the through-hole and said defined position on the another element, preferably in the x-y-plane, is reduced to less than 2 µm, preferably to less than 1 µm, more preferably to less than 0.1 µm even more preferred less than 50 nm, and/or
wherein the positional error between said contour surrounding the through-hole and said defined position on the another element, preferably in the z-direction, more preferably over the entire area of the substrate, is reduced to less than 20 µm and/or
wherein the structured substrate and/or the another element comprises markings which are introduced by ion beam treatment, wherein said markings preferably are used for aligning and/or assisting aligning the structured substrate with respect to another element.

18. Use of a structured substrate according to any one of the preceding claims for manufacturing a micro system, preferably a micro optical system,
wherein, preferably, the micro optical system comprises multiple layers and at least one of said layers is formed as the structured substrate,
wherein, preferably, stray light in the micro system is reduced by means of the light absorbing coating covering the inner wall surface of the through-hole extending through the material of the planar substrate of the structured substrate.

19. Assembly comprising a layer structure of two or more layers, wherein at least one of the layers is a structured substrate according to any one of claims 1 to 14.

20. Assembly of claim 20, comprising at least one further substrate layer having markings corresponding to the through holes of the structured substrate, wherein the markings of the further substrate and the through holes of the structured layer are aligned.

21. Assembly comprising at least three layers, having in this order a first micro-optic layer, a structured layer according to any one of claims 1 to 14, and a second micro-optic layer.

22. Beam trap comprising a structured substrate according to any one of claims 1 to 14 and a further substrate connected thereto, said further substrate comprising at least one blackened and/or roughened surface.
